# EUROPEAN PATENT SPECIFICATION

(11) **EP 2 337 416 B1**
(45) Date of publication and mention of the grant of the patent: **08.02.2012**
(21) Application number: 09290973.8
(22) Date of filing: 18.12.2009
(51) Int. Cl.: H04W 72/08

(54) **Method for managing resources in a telecommunication system**
Verfahren zur Verwaltung von Ressourcen in einem Telekommunikationssystem
Procédé de gestion des ressources dans un système de télécommunication

(43) Date of publication of application: 22.06.2011
(73) Proprietor: Alcatel Lucent, 75008 Paris (FR)
(72) Inventor: Fetscher, Robert, 70186 Stuttgart (DE); Cesar, Bozo, 70439 Stuttgart (DE); Doll, Mark, 70469 Stuttgart (DE); Halbauer, Hardy, 76275 Ettlingen (DE); Gloss, Bernd, 70569 Stuttgart (DE); Stanze, Oliver, 70499 Stuttgart (DE)
(74) Representative: Schmidt, Werner Karl

(56) References cited:
- WO-A1-98/41049
- WO-A2-2006/068739

## Description

### Field of the invention

The invention relates to a method for managing resources in a telecommunication system.

### Background and related art

In common multi-cellular telecommunication systems different resource distribution schemes are possible for managing resources. A resource distribution scheme distributes resources for schedulable connections in the telecommunication system.

Two resource distribution schemes are for example the frequency distribution schemes reuse 1 (RU1) and reuse 3 (RU3). In RU1 the whole available frequency bandwidth is provided to mobile stations in the cell using RU1. In RU3 only a third of the available frequency bandwidth is provided to mobile stations in the cell using RU3.

Such a resource distribution scheme is to be distinguished from an actual resource distribution. In WO 98/41049, the mobile stations are grouped and allocated specific resources, based on their signal levels.

### Summary of the invention

The invention provides a method for managing resources in a telecommunication system. Preferably, the telecommunication system is a wireless telecommunication system comprising a plurality of mobile stations. The method comprises the steps of associating a first plurality of mobile stations to a first group. Each mobile station of the first plurality of mobile stations has a connection quality that is above a first dynamic threshold. A dynamic threshold means that the value of the threshold can be adapted for optimizing the method. Thus, the first threshold is not fixed. It is to be noted that each mobile station of the first plurality of mobile stations has a connection quality that may differ from the connection quality of another mobile station of the first plurality of mobile stations.

In a second step a second plurality of mobile stations is associated to a second group. Each mobile station of the second plurality of mobile stations has a connection quality that is below a second dynamic threshold. The second dynamic threshold may also be adapted for optimizing the method. The connection quality of a mobile station of the second plurality of mobile stations may differ from the connection quality of another mobile station of the second plurality of mobile stations.

The first group is then associated to a first resource distribution scheme and the second group is associated to a second resource distribution scheme.

According to embodiments of the invention the first and the second threshold are adapted to resource requirements of schedulable connections between mobile stations associated with either one of said groups and at least one base station. In other words, the dynamic thresholds are increased or decreased dependent on resource requirements of schedulable connections between mobile stations of the first and of the second group. For example, the dynamic thresholds are adapted such that the first and the second resource distribution scheme provide their resources for optimizing the scheduling of the schedulable connections.

According to embodiments of the invention at least one of the first and the second threshold is decreased when there are schedulable connections of the second plurality of mobile stations and free resources in the first resource distribution scheme. Free resources in the first resource distribution scheme mean that more connections may be scheduled according to the first resource distribution scheme than there are actually scheduled by the first resource distribution scheme.

According to embodiments of the invention at least one of the first and the second threshold is increased when there are schedulable connections of the first plurality of mobile stations and free resources in the second resource distribution scheme. Free resources in a distribution scheme mean that additionally to the actually scheduled connections more connections may be scheduled according to the resource distribution scheme.

According to embodiments of the invention the first and the second threshold are signal quality thresholds. This means, the connection quality is defined by the signal quality. If the signal quality of a mobile station is above the first threshold the mobile station is associated to the first group and if the signal quality of a mobile station is below the second threshold the mobile station is associated to the second group. The first and the second dynamic thresholds may be identical or not identical. If the thresholds are not identical, mobile stations with a signal quality in between the two thresholds associated to one of the two groups keep being associated to this group. A re-associating of a mobile station to another group is only triggered when its signal quality exceeds the first threshold or falls below the second threshold.

A mobile station that has been disconnected from the telecommunication system is immediately associated to one of the two groups after its registration with the telecommunication system. If its signal quality is below the second threshold it is associated to the second group and if its signal quality is above the first threshold it is associated to the first group. In case the two thresholds are not identical and the signal quality of the newly registered mobile station is in between the first and the second threshold the mobile station is preferably associated to the first group. Alternatively, the mobile station may in this case be associated to the second group.

According to embodiments of the invention a first mobile station from the first group is associated to the second group only if the connection quality of the first mobile station being associated to the second group is at least as good as the connection quality of the first mobile station being associated to the first group. In other words, the first mobile station is only associated to the second group if its connection quality when it is associated to the second group is at least as good as its connection quality when it is associated to the first group. Thus, the first mobile station is not associated to the second group if its connection quality would suffer from the association to the second group. The first mobile station stays in this case in the first group.

According to embodiments of the invention a second mobile station from the second group is associated to the first group only if the connection quality of the second mobile station being associated to the second group is expected to have the least difference to the connection quality of the second mobile station being associated to the first group compared to the respective differences of mobile stations from the second plurality of mobile stations. In other words, the second mobile station is the mobile station from the second group, whose connection quality will suffer the least in comparison to the other mobile stations from the second group in case of associating the second mobile station to the first group. This means the connection quality of every other mobile station from the second group would suffer more when the respective mobile station would be associated to the first group.

According to embodiments of the invention, if there are schedulable connections of the second plurality of mobile stations and free resources in the first distribution scheme, these free resources are assigned to at least one mobile station of the second group. If there are schedulable connections of the first plurality of mobile stations and free resources in the second distribution scheme, these free resources are assigned to at least one mobile station of the first group. In other words, free resources in any distribution scheme may be assigned to mobile stations being associated to another distribution scheme if there are still schedulable connections left.

According to embodiments of the invention the resources are time, frequency and/or code resources. This means, the resource distribution schemes distribute either certain time and frequency slots to the users being associated to the respective resource distribution scheme or a number of coding sequences to the users of the respective resource distribution scheme.

For example, in an OFDMA system time and frequency are distributed by the resource distribution schemes while in a CDMA system coding sequences are distributed by the resource distribution scheme.

According to embodiments of the invention the resources of the two resource distribution schemes are separated in space, time, frequency, power and/or code. This means, the resources distributed by the first resource distribution scheme are different in time, space, frequency, power and/or code from the resources distributed by the second resource distribution scheme.

According to embodiments of the invention the first resource distribution scheme provides a first resource range to schedulable connections of the first plurality of mobile stations and the second resource distribution scheme provides a second resource range to schedulable connections of the second plurality of mobile stations. A resource range may for example be a frequency bandwidth, certain time periods, and/or code ranges.

Preferably the second resource ranges of two neighboring base stations are disjoined. This means, that two neighboring base stations do not provide the same second resource range to mobile stations associated to the respective second groups. The first resource range of two neighboring base stations is preferably the same resource range. In other words, two neighboring base stations may provide the same first resource range to mobile stations from the respective first groups.

In another aspect the invention relates to a computer readable storage medium containing instructions that when executed by a base station cause the base station to perform a method as described above.

In yet another aspect the invention relates to a base station apparatus comprising means for associating a first plurality of mobile stations to a first group, wherein each mobile station of the first plurality of mobile stations has a connection quality that is above a first dynamic threshold, means for associating a second plurality of mobile stations to a second group, wherein each mobile station of the second plurality of mobile stations has a connection quality that is below a second dynamic threshold, means for associating the first group to a first resource distribution scheme, and means for associating the second group to a second resource distribution scheme.

In yet another aspect the invention relates to a telecommunication system comprising a plurality of base stations according to claim 14. Preferably the telecommunication system is a wireless telecommunication system.

### Brief description of the drawings

In the following preferred embodiments of the invention will be described, by way of example only, and with reference to the drawings in which:
- Fig. 1: is a schematic view of a wireless telecommunication system compris- ing a plurality of cells and base stations;
- Fig. 2: is a graph of a connection quality of a mobile station;
- Fig. 3: is a flow diagram of a method for managing resources in a wireless telecommunication system; and
- Fig. 4: is a block diagram of a base station adapted for performing a method for managing resources in a wireless telecommunication system.

### Detailed description

Like numbered elements in these figures are either identical elements or perform the same function. Elements which have been discussed previously will not necessarily be discussed in later figures if the function is identical.

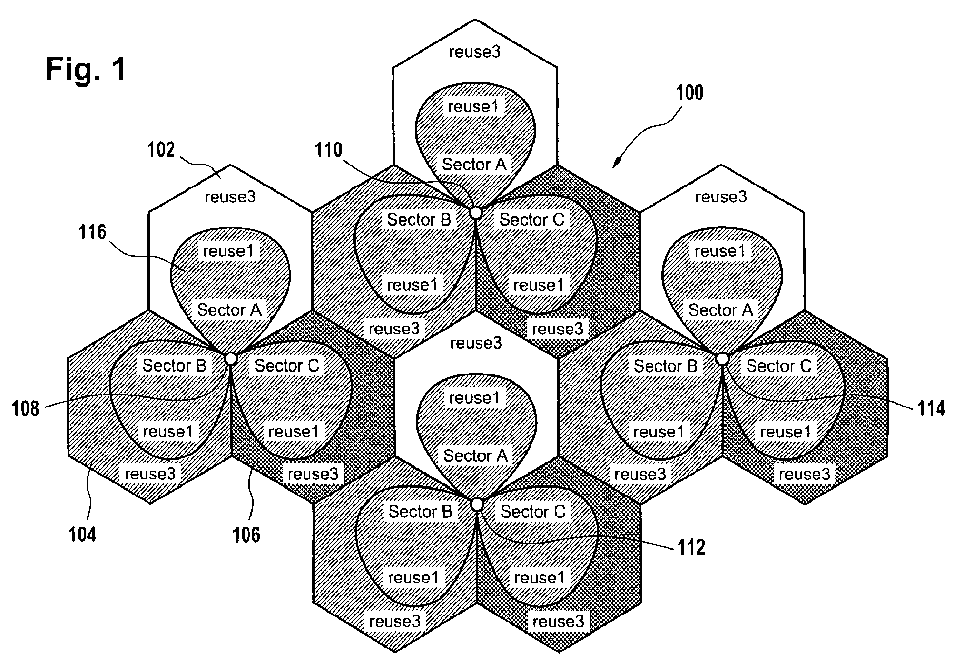

Fig. 1 is a schematic view of a wireless telecommunication system 100 comprising a plurality of cells 102, 104 and 106. Each cell 102, 104 and 106 is served by a base station. Depicted are 12 cells and four sites 108, 110, 112 and 114 with three base stations each. Each base station serves a single cell. It is to be noted that only for one site 108 the cells 102, 104 and 106 are marked with reference signs. Each cell 102 is also referred to as sector A, each cell 104 is also referred to as sector B and each cell 106 is also referred to as sector C.

In each cell 102, 104 and 106 a lobe 116 is depicted representing the use of a resource distribution scheme different from the used resource distribution scheme outside lobe 116. Lobe 116 fills out the central area of each cell 102, 104 and 106. Thus, in the center region of each cell 102, 104 and 106 a first resource distribution scheme is used in the region of lobe 116. The first resource distribution scheme is referred to also as reuse 1 in Fig. 1. Outside lobe 116 a secondary source distribution scheme is used in the border region of each cell 102, 104 and 106. The second resource distribution scheme outside lobe 116 is also referred to as reuse 3 in Fig. 1.

The wording reuse 1 and reuse 3 refers to the use of a range of the distributed resource. Reuse 3 means that in this region in a cell only a third of the available resource range is distributed to schedulable connections of mobile stations. In the first distribution scheme reuse 1, the whole resource range is distributed to mobile stations for schedulable connections of the mobile stations with a base station.

For example the distributed resource may be a frequency bandwidth. Then in the reuse 1 regions in each cell the whole frequency bandwidth would be available for connections of mobile stations in the respective reuse 1 area 116.

Because only a third of the available bandwidth is used in the border region of each cell, signal interferences between signals originating from different base stations are minimized. Each cell 102 uses for example a first third of the bandwidth, each cell 104 uses a second third of the bandwidth and each cell 106 uses a third third of the bandwidth. A cell 102 of a first base station is never adjacent to a cell 102 of another base station. Thus, a reuse 3 region using the first third of the bandwidth is never adjacent to another reuse 3 region using also the first third of the bandwidth.

In the lobes 116 the first resource distribution scheme reuse 1 is used. This is advantageous because the whole frequency bandwidth can be used for scheduling connections of the mobile stations being located in the lobe 116. Thus, more connections can be scheduled in the reuse 1 region compared to a reuse 3 region. The use of the reuse 3 distribution scheme in the border cell regions is advantageous because signal interferences with neighboring cells are minimized.

The association of a mobile station to the first or the second resource distribution scheme depends on the connection quality of the mobile station. If the connection quality for example exceeds a first threshold the mobile station is associated to the first resource distribution scheme reuse 1; if the connection quality of the mobile station is below a second threshold the mobile station is associated to the second resource distribution scheme reuse 3. In case of a WiMAX/IEEE 802.16 system, and defining connection quality by the signal quality, as a measurable value for the signal quality the carrier to interference and noise ratio (CINR) is used.

Mixed reuse 1/reuse 3 operation can be done either by frame separation in the time domain with distinct sub-frames for reuse 1 and reuse 3 mobile stations, or by means of downlink power control where no frame separation in the time domain is necessary, but reuse 3 mobile stations are scheduled with full power in a dedicated frequency segment only and reuse 1 mobile stations can use the whole frequency band with reduced transmission power.

The association of mobile stations to the reuse 1 and reuse 3 clusters described here is mainly based on the carrier to interference and noise ratio (CINR) of the individual mobile stations measured on the preamble for reuse 1 and reuse 3. For more flexibility also the CINR measured in the current scheduling zone is considered which is available at the base station, e.g. due to channel quality information (CQI) reports from mobile stations for link adaptation. To account for the high variability of the instantaneous channel an average CINR over a number of several recent feedbacks and a hysteresis is used to assign mobile stations to the corresponding reuse cluster. Due to the averaging mainly the path-loss and the interference will influence the reported CINR values. In this context the base station's main task is to optimally classify all served mobile stations with respect to overall resource utilization and to provide adequate service quality under different interference situations.

Reuse cluster classification aims at scheduling mobile stations with good CINR conditions in the reuse 1 and mobile stations with low CINR conditions in the reuse 3 zone. Reuse 3 zones have orthogonal resources between adjacent cells such that they exhibit reduced interference impact especially at cell borders. In reuse 1 zones all resources are commonly used between adjacent cells.

The average preamble CINR does not change rapidly such that channel feedback in larger periods is sufficient for classification. Therefore the base station, additionally to the zone channel quality information channel (CQICH), periodically requests downlink preamble CINR measurements from the mobile stations, e.g. with the report request/response (REP-REQ/RSP in WiMAX) signaling messages in order to update its internal reuse clusters.

Instead of a downlink preamble CINR measurement, sounding may be used for measuring interferences. It is to be noted that interferences in the whole frequency band must be measured.

The base station periodically polls the mobile stations to report their channel quality and based on this information dynamically assigns them to a reuse 1 or a reuse 3 cluster. The reuse 3 cluster is characterized by a certain, at least minimum, service level even at sector borders and the reuse 1 cluster is characterized by high throughput in the sector center.

Besides channel quality reports the mechanism also takes into account the distribution of the current load in the sector, i.e. whether all mobile stations classified for the reuse 3 cluster actually can be served in the reuse 3 zone. This is done by a dynamic adaptation of the upper and lower thresholds of the hysteresis. In case of too many mobile stations in the reuse 3 cluster, the thresholds are decreased. Thereby those mobile stations in the reuse 3 cluster that still have better channel conditions than other mobile stations in the reuse 3 cluster will be shifted to the reuse 1 cluster and in the following frames will be served in the reuse 1 zone. Consequently the classification procedure sets a constraint for the scheduling which rather has a relative than an absolute character such that always the mobile stations with the worst channel conditions are assigned to the reuse 3 cluster.

Also, a mobile station will remain in the reuse 1 cluster if the evaluation of preamble measurements suggests a change to cluster reuse 3 but the CINR measured in the reuse 1 zone for link adaption is still sufficient to serve the mobile station with the same burst profile.

If the reuse 3 zone of the frame resources is not completely used by mobile stations from the reuse 3 cluster, what could be the case if the thresholds have been reduced too much, the remaining resources in the reuse 3 zone can as well be used by mobile stations of the reuse 1 cluster without any restrictions or further implications. The same is valid for remaining resources in the reuse 1 zone of the frame. These may be used by mobile stations of the reuse 3 cluster. Due to the higher interference a mobile station from the reuse 3 cluster would experience in the reuse 1 zone, the scheduling of a mobile station of the reuse 3 cluster into the reuse 1 zone may require the selection of a lower burst profile or repetition coding.

In the following the threshold based reuse 1(RU1)/reuse 3(RU3) classification algorithm of the BS is given in pseudo code. The first threshold is referred to as "threshold_high" and the second threshold is "threshold_low". "BP" means "burst profile":

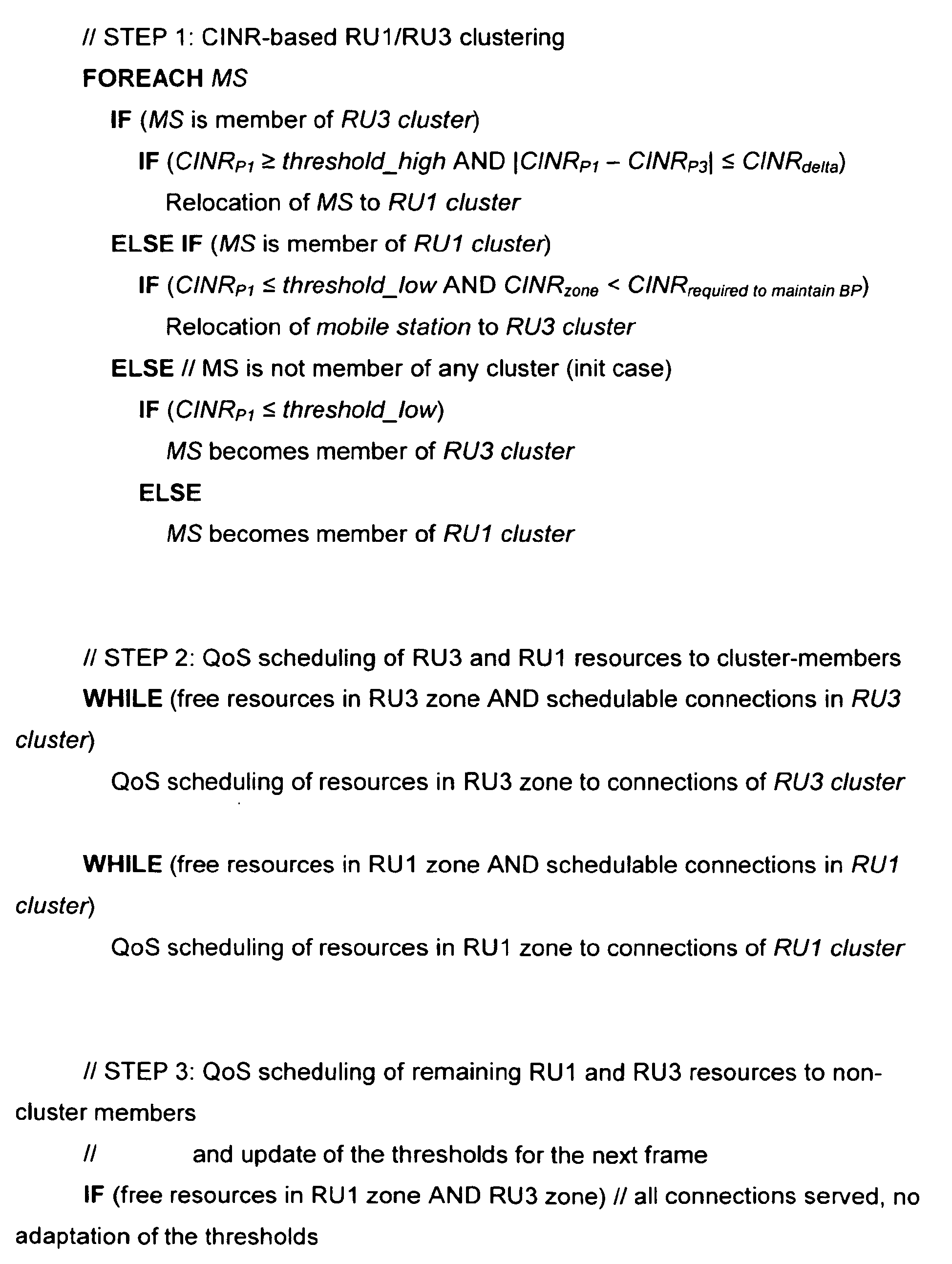

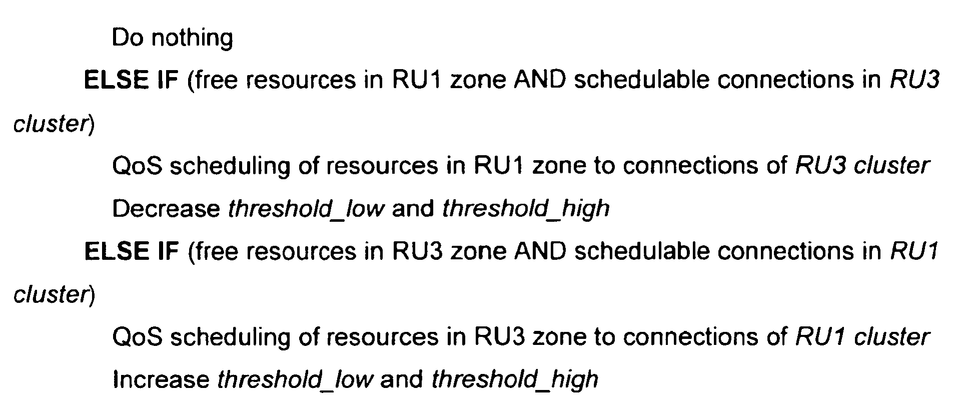

In a first step, a CINR based RU1/RU3 clustering of mobile stations is done by the base station. Mobile stations from the RU3 cluster are first checked for their reported signal quality on RU1 resources, i.e. the value *CINR_{P1},* which is measured over the whole bandwidth corresponding to RU1 resources, to be greater than the upper threshold of the hysteresis for relocation into the RU1 cluster. Additionally the difference between *CINR_{P1}* and the signal quality measured on resources which correspond to resources used in the RU3 zone, i.e. the difference between the reuse 1 and reuse 3 preamble CINRs *CINR_{P1}* and *CINR_{P3}* is evaluated to be less than *CIN-R_{delta}* in order to retain the burst profile from the previous cluster, wherein *CINR _{P3}* is the reported signal quality on RU3 resources. Mobile stations from the RU1 cluster are first checked for their reported reuse 1 CINR to be less than the lower threshold of the hysteresis to be relocated into the RU3 cluster. A second criteria is that the zone CINR *CINR_{zone}* which is the effective CINR or physical CINR measured on dedicated resources allocated to the specific user has to be less than the required CINR for the current BP *CINR_{required to maintain BP},* otherwise the mobile station can further on be served in the RU1 zone.

In case the mobile station has not been assigned to a RU cluster yet (e.g. after network entry) classification can be done on one threshold only (e.g. the lower threshold).

In a next step the Quality of Service (QoS) scheduler assigns the resources in the RU1 zone to mobile stations of the RU1 cluster and the resources in the RU3 zone to mobile stations of the RU3 cluster.

Finally the QoS scheduler may assign remaining resources to non-cluster members. For example if there are remaining resources in the RU1 zone and not all RU3 cluster members had been scheduled, the QoS scheduler may assign the remaining resources to RU3 cluster members, however with reduced transmission power as RU1 cluster members. Additionally the hysteresis thresholds are adapted accordingly that the conditions for becoming a RU3 cluster member in the next frame are sharpened, which means that both thresholds are decreased.

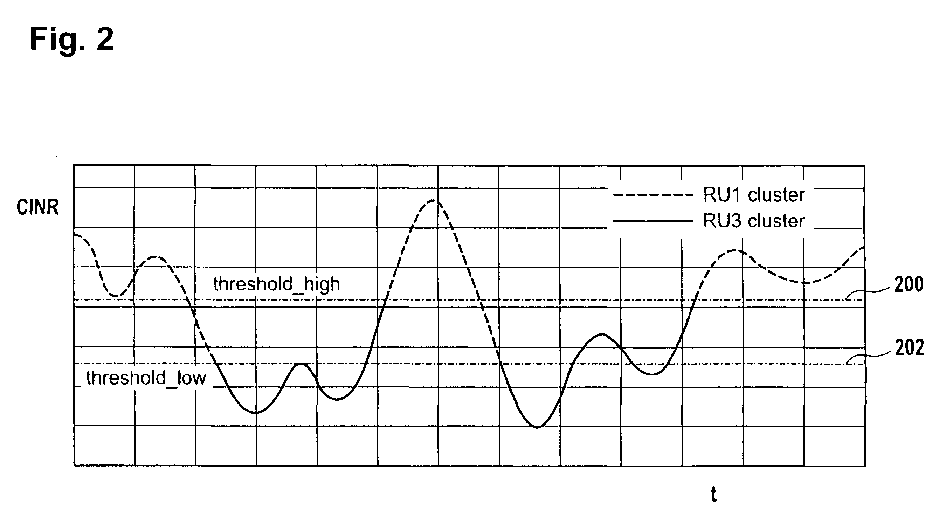

Fig. 2 is a graph showing the CINR of a mobile station in dependency of the time. The y-axis represents the CINR and the x-axis represents the time. For the sake of clarity in graphical representation, first and second connection quality, i.e. *CINR_{P1}* and *CINR_{P3},* are assumed to be equal and are thus summarized as CINR. A first line 200 represents the second threshold, also referred to as threshold low, and the second line 202 represents the first threshold, also referred to as threshold_high.

In the beginning, on the left of the graph, the CINR of the mobile station is above the first and the second threshold. Then, it decreases and when it falls below the second threshold the mobile station is associated to the second group using the second resource distribution scheme reuse 3. Then, the CINR increases again and, when exceeding the first threshold, the first mobile station is associated to the first group using the first resource distribution scheme reuse 1. After a maximum CINR the CINR decreases again and falls again below the second threshold, which triggers the re-association of the mobile station to the second group. Afterwards, the CINR exceeds the second threshold but not the first threshold. This does not trigger a re-association of the mobile station to a resource distribution scheme. The mobile station stays in the second group. Afterwards, the CINR exceeds again the first threshold and the mobile station is again associated to the first group.

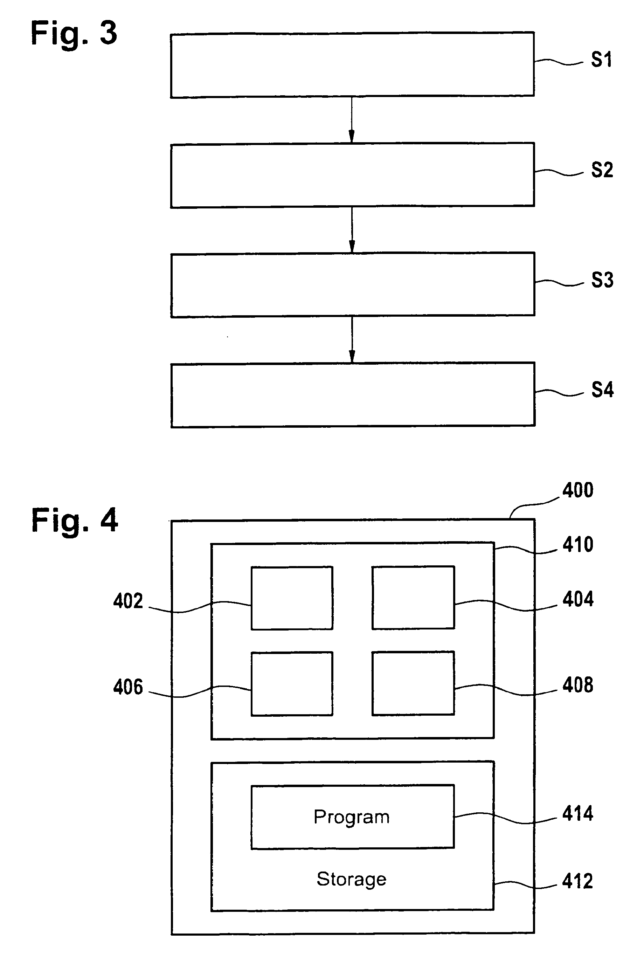

Fig. 3 is a flow diagram of a method comprising the following steps. In a first step S1 a first plurality of mobile stations is associated to a first group. Each mobile station of the first plurality of mobile stations has a connection quality that is above a first dynamic threshold. In a second step S2 a second plurality of mobile stations is associated to a second group. Each mobile station of the second plurality of mobile stations has a connection quality that is below a second dynamic threshold. In a third step S3 the first group is associated to a first resource distribution scheme, for example reuse 1. A fourth step S4, the second group is associated to a second resource distribution scheme, for example reuse 3.

Fig. 4 is a base station apparatus 400 comprising means 402 for associating a first plurality of mobile stations to a first group. Second association means 404 are adapted to associate a second plurality of mobile stations to a second group. Third association means 406 associate the first group to a first resource distribution scheme, for example reuse 1. Further, fourth association means 408 are adapted for associating the second group to a second resource distribution scheme, for example reuse 3.

Preferably a processor 410 comprises the association means 402, 404, 406 and 408. For example, the processor 410 executes a program 414, which is stored on a storage 412.

### List of reference numerals

| | |
|---|---|
| 100 | Wireless telecommunication system |
| 102 | Cell |
| 104 | Cell |
| 106 | Cell |
| 108 | Site with three base stations |
| 110 | Site with three base stations |
| 112 | Site with three base stations |
| 114 | Site with three base stations |
| 116 | Lobe |
| 200 | Threshold |
| 202 | Threshold |
| 400 | Base station |
| 402 | Group association means |
| 404 | Group association means |
| 406 | Distribution scheme association means |
| 408 | Distribution scheme association means |
| 410 | Processor |
| 412 | Storage |
| 414 | Program |

## Claims

1. A method for managing resources of a cell in a digital cellular telecommunication system, the method comprising steps of:
- associating (S1) a first plurality of mobile stations of the cell to a first group of mobile stations, wherein each mobile station of the first plurality of mobile stations has a connection quality that is above a first dynamic threshold (200);
- associating (S2) a second plurality of mobile stations of the same cell to a second group of mobile stations, wherein each mobile station of the second plurality of mobile stations has a connection quality that is below a second dynamic threshold (202);
- associating (S3) the first group to a first resource distribution scheme; and
- associating (S4) the second group to a second resource distribution scheme.

2. Method according to claim 1, wherein the first and the second threshold are selected in accordance with resource requirements of schedulable connections between mobile stations associated to either one of said groups and at least one base station.

3. Method according to claim 2, wherein at least one of the first and the second threshold is decreased when there are schedulable connections of the second plurality of mobile stations and free resources in the first resource distribution scheme.

4. Method according to claim 2, wherein at least one of the first and the second threshold is increased when there are schedulable connections of the first plurality of mobile stations and free resources in the second resource distribution scheme.

5. Method according to any one of the preceding claims, wherein the first and the second threshold are signal quality thresholds.

6. Method according to any one of the preceding claims, wherein a first mobile station from the first group is associated to the second group only if the connection quality of the first mobile station being associated to the second group is at least as good as the connection quality of the first mobile station being associated to the first group.

7. Method according to any one of the preceding claims, wherein a second mobile station from the second group is associated to the first group only if the connection quality of the second mobile station being associated to the second group is expected to have the least difference to the connection quality of the second mobile station being associated to the first group compared to the respective differences of mobile stations from the second plurality of mobile stations.

8. Method according to any one of the preceding claims, wherein free resources in the first distribution scheme are assigned to at least one mobile station of the second group, and wherein free resources in the second distribution scheme are assigned to at least one mobile station of the first group.

9. Method according to any one of the preceding claims, wherein the resources are time, frequency and/or code resources.

10. Method according to any one of the preceding claims, wherein the resources of the two resource distribution schemes are separated in space, time, frequency, power and/or code.

11. Method according to any one of the claims 2-10, wherein the first resource distribution scheme provides a first resource range to schedulable connections of the first plurality of mobile stations and the second resource distribution scheme provides a second resource range to schedulable connections of the second plurality of mobile stations.

12. Method according to claim 11, wherein the second resource ranges of two neighbouring base stations are disjoint, and wherein the first resource range of two neighbouring base stations is the same resource range.

13. A computer-readable storage medium containing instructions that when executed by a base station cause the base station to perform a method according to any one of the preceding claims.

14. Base station apparatus (400) comprising
- Means (402) for associating a first plurality of mobile stations to a first group, wherein each mobile station of the first plurality of mobile stations has a connection quality that is above a first dynamic threshold;
- Means (404) for associating a second plurality of mobile stations to a second group, wherein each mobile station of the second plurality of mobile stations has a connection quality that is below a second dynamic threshold;
- Means (406) for associating the first group to a first resource distribution scheme; and
- Means (408) for associating the second group to a second resource distribution scheme.

15. Telecommunication system comprising a plurality of base stations according to claim 14.

## Patentansprüche

1. Verfahren zur Verwaltung von Ressourcen einer Zelle in einem digitalen zellularen Telekommunikationssystem, wobei das Verfahren die folgenden Schritte umfasst:
- Assoziieren (S1) einer ersten Vielzahl von mobilen Stationen der Zelle mit einer ersten Gruppe von mobilen Stationen, wobei jede mobile Station der ersten Vielzahl von mobilen Stationen eine Verbindungsqualität aufweist, welche einen ersten dynamischen Grenzwert (200) überschreitet;
- Assoziieren (S2) einer zweiten Vielzahl von mobilen Stationen derselben Zelle mit einer zweiten Gruppe von mobilen Stationen, wobei jede mobile Station der zweiten Vielzahl von mobilen Stationen eine Verbindungsqualität aufweist, welche einen zweiten dynamischen Grenzwert (202) unterschreitet;
- Assoziieren (S3) der ersten Gruppe mit einem ersten Ressourcenverteilungsschema; und
- Assoziieren (S4) der zweiten Gruppe mit einem zweiten Ressourcenverteilungsschema.

2. Verfahren nach Anspruch 1, wobei der erste und der zweite Grenzwert gemäß den Ressourcenanforderungen von planbaren Verbindungen zwischen mobilen Stationen, die mit einer beliebigen der besagten Gruppen und mindestens einer Basisstation assoziiert sind, ausgewählt werden.

3. Verfahren nach Anspruch 2, wobei mindestens entweder der erste oder der zweite Grenzwert gesenkt wird, wenn planbare Verbindungen der zweiten Mehrzahl von mobilen Stationen und freie Ressourcen in dem ersten Ressourcenverteilungsschema vorhanden sind.

4. Verfahren nach Anspruch 2, wobei mindestens entweder der erste oder der zweite Grenzwert erhöht wird, wenn planbare Verbindungen der ersten Mehrzahl von mobilen Stationen und freie Ressourcen in dem zweiten Ressourcenverteilungsschema vorhanden sind.

5. Verfahren nach einem beliebigen der vorstehenden Ansprüche, wobei der erste und der zweite Grenzwert Signalqualitätsgrenzwerte sind.

6. Verfahren nach einem beliebigen der vorstehenden Ansprüche, wobei eine erste mobile Station aus der ersten Gruppe nur dann mit der zweiten Gruppe assoziiert wird, wenn die Verbindungsqualität der ersten mobilen Station, die mit der zweiten Gruppe assoziiert ist, mindestens ebenso gut ist wir die Verbindungsqualität der ersten mobilen Station, die mit der ersten Gruppe assoziiert ist.

7. Verfahren nach einem beliebigen der vorstehenden Ansprüche, wobei eine zweite mobile Station aus der zweiten Gruppe nur dann mit der ersten Gruppe assoziiert wird, wenn erwartet wird, dass die Verbindungsqualität der zweiten mobilen Station, die mit der zweiten Gruppe assoziiert ist, die geringste Differenz im Verhältnis zur Verbindungsqualität der zweiten mobilen Station, die mit der ersten Gruppe assoziiert ist, im Vergleich zu den jeweiligen Differenzen der mobilen Stationen aus der zweiten Vielzahl von mobilen Stationen aufweist.

8. Verfahren nach einem beliebigen der vorstehenden Ansprüche, wobei freie Ressourcen in dem ersten Verteilungsschema an mindestens eine mobile Station aus der zweiten Gruppe zugewiesen werden, und wobei freie Ressourcen in dem zweiten Verteilungsschema an mindestens eine mobile Station aus der ersten Gruppe zugewiesen werden.

9. Verfahren nach einem beliebigen der vorstehenden Ansprüche, wobei die Ressourcen Zeit-, Frequenz- und/oder Coderessourcen sind.

10. Verfahren nach einem beliebigen der vorstehenden Ansprüche, wobei die Ressourcen beider Verteilungsschemen in Raum, Zeit, Frequenz, Leistung und/oder Code getrennt sind.

11. Verfahren nach einem beliebigen der Ansprüche 2-10, wobei das erste Ressourcenverteilungsschema einen ersten Ressourcenbereich an planbare Verbindungen der ersten Vielzahl von mobilen Stationen bereitstellt, und das zweite Ressourcenverteilungsschema einen zweiten Ressourcenbereich an planbare Verbindungen der zweiten Vielzahl von mobilen Stationen bereitstellt.

12. Verfahren nach Anspruch 11, wobei die zweiten Ressourcenbereiche von zwei benachbarten Basisstationen disjunkt sind, und wobei der erste Ressourcenbereich zweier benachbarter Basisstationen derselbe Ressourcenbereich ist.

13. Computerlesbares Speichermedium, welches Befehle enthält, die bei deren Ausführung durch eine Basisstation bewirken, dass die Basisstation ein Verfahren nach einem beliebigen der vorstehenden Ansprüche durchführt.

14. Basisstationsvorrichtung (400), umfassend
- Mittel (402) zum Assoziieren einer ersten Vielzahl von mobilen Stationen mit einer ersten Grupp, wobei jede mobile Station der ersten Vielzahl von mobilen Stationen eine Verbindungsqualität aufweist, welche einen ersten dynamischen Grenzwert überschreitet;
- Mittel (404) zum Assoziieren einer zweiten Vielzahl von mobilen Stationen mit einer zweiten Gruppe, wobei jede mobile Station der zweiten Vielzahl von mobilen Stationen eine Verbindungsqualität aufweist, welche einen zweiten dynamischen Grenzwert unterschreitet;
- Mittel (406) zum Assoziieren der ersten Gruppe mit einem ersten Ressourcenverteilungsschema; und
- Mittel (408) zum Assoziieren der zweiten Gruppe mit einem zweiten Ressourcenverteilungsschema.

15. Telekommunikationssystem, umfassend eine Vielzahl von Basisstationen gemäß Anspruch 14.

## Revendications

1. Procédé de gestion des ressources d'une cellule dans un système de télécommunication cellulaire numérique, le procédé comprenant les étapes suivantes :
- Association (S1) d'une première pluralité de stations mobiles de la cellule à un premier groupe de stations mobiles, chaque station mobile de la première pluralité de stations mobile possédant une qualité de connexion qui est supérieure à un premier seuil dynamique (200) ;
- Association (S2) d'une deuxième pluralité de stations mobiles de la même cellule à un deuxième groupe de stations mobiles, chaque station mobile de la deuxième pluralité de stations mobiles possédant une qualité de connexion qui est inférieure à un deuxième seuil dynamique (202) ;
- Association (S3) du premier groupe à un premier modèle de distribution des ressources ; et
- Association (S4) du deuxième groupe à un deuxième modèle de distribution des ressources.

2. Procédé selon la revendication 1, selon lequel le premier et le deuxième seuils sont sélectionnés conformément aux exigences de ressources de connexions programmables entre les stations mobiles associées à l'un ou l'autre desdits groupes et au moins une station de base.

3. Procédé selon la revendication 2, selon lequel au moins l'un des premier et deuxième seuils est abaissé lorsqu'il existe des connexions programmables de la deuxième pluralité de stations mobiles et des ressources libres dans le premier modèle de distribution des ressources.

4. Procédé selon la revendication 2, selon lequel au moins l'un des premier et deuxième seuils est relevé lorsqu'il existe des connexions programmables de la première pluralité de stations mobiles et des ressources libres dans le deuxième modèle de distribution des ressources.

5. Procédé selon l'une quelconque des revendications précédentes, selon lequel le premier et le deuxième seuils sont des seuils de qualité du signal.

6. Procédé selon l'une quelconque des revendications précédentes, selon lequel une première station mobile du premier groupe est associée au deuxième groupe uniquement si la qualité de connexion de la première station mobile associée au deuxième groupe est au moins aussi bonne que la qualité de connexion de la première station mobile associée au premier groupe.

7. Procédé selon l'une quelconque des revendications précédentes, selon lequel une deuxième station mobile du deuxième groupe est associée au premier groupe uniquement s'il est prévu que la qualité de connexion de la deuxième station mobile associée au deuxième groupe présente la plus petite différence de qualité de connexion de la deuxième station mobile associée au premier groupe en comparaison des différences respectives des stations mobiles de la deuxième pluralité de stations mobiles.

8. Procédé selon l'une quelconque des revendications précédentes, selon lequel les ressources libres dans le premier modèle de distribution sont affectées à au moins une station mobile du deuxième groupe et selon lequel les ressources libres dans le deuxième modèle de distribution sont affectées à au moins une station mobile du premier groupe.

9. Procédé selon l'une quelconque des revendications précédentes, selon lequel les ressources sont des ressources de temps, de fréquence et/ou de code.

10. Procédé selon l'une quelconque des revendications précédentes, selon lequel les ressources des deux modèles de distribution des ressources sont séparées dans l'espace, le temps, en fréquence, en puissance et/ou en code.

11. Procédé selon l'une quelconque des revendications 2 à 10, selon lequel le premier modèle de distribution des ressources fournit une première plage de ressources aux connexions programmables de la première pluralité de stations mobiles et le deuxième modèle de distribution des ressources fournit une deuxième plage de ressources aux connexions programmables de la deuxième pluralité de stations mobiles.

12. Procédé selon la revendication 11, selon lequel les deuxièmes plages de ressources de deux stations de base voisines sont dissociées et selon lequel la première plage de ressources de deux stations de base voisines est la même plage de ressources.

13. Support de stockage lisible par ordinateur contenant des instructions qui, lorsqu'elles sont exécutées par une station de base, ont pour effet que la station de base met en oeuvre un procédé selon l'une quelconque des revendications précédentes.

14. Appareil de station de base (400) comprenant
- des moyens (402) pour associer une première pluralité de stations mobiles à un premier groupe, chaque station mobile de la première pluralité de stations mobiles possédant une qualité de connexion qui est supérieure à un premier seuil dynamique ;
- des moyens (404) pour associer une deuxième pluralité de stations mobiles à un deuxième groupe, chaque station mobile de la deuxième pluralité de stations mobiles possédant une qualité de connexion qui est inférieure à un deuxième seuil dynamique ;
- des moyens (406) pour associer le premier groupe à un premier modèle de distribution des ressources ; et
- des moyens (408) pour associer le deuxième groupe à un deuxième modèle de distribution des ressources.

15. Système de télécommunication comprenant une pluralité de stations de base selon la revendication 14.
